# FASCICULE DE BREVET EUROPEEN

(11) **EP 2 855 242 B1**
(45) Date de publication et mention de la délivrance du brevet: **16.03.2016**
(21) Numéro de dépôt: 13719982.4
(22) Date de dépôt: 04.04.2013
(51) Int. Cl.: B62D 25/16

(54) **STRUCTURE DE VEHICULE AVEC SUPPORT D'AILE A DEFORMATION CONTROLEE EN CAS D'IMPACT**
WAGENSTRUKTUR MIT EINEM KOTFLÜGELTRÄGER MIT KONTROLIERTER FORMVERÄNDERUNG IM FALLE VON EINEM AUFPRALL
VEHICLE STRUCTURE COMPRISING WING SUPPORT WITH CONTROLLED DEFORMATION IN THE EVENT OF AN IMPACT

(30) Priorité: 25.05.2012 FR 1254880
(43) Date de publication de la demande: 08.04.2015
(73) Titulaire: PSA Peugeot Citroën Automobiles S.A., 78140 Velizy Villacoublay (FR)
(72) Inventeur: BENANE, Said, F-94550 Chevilly Larue (FR); KOZAK, Alban, F-78140 Velizy (FR); DEULOT, Regis, F-93290 Tremblay EnFrance (FR)
(86) Numéro de dépôt international: PCT/FR2013/050741
(87) Numéro de publication internationale: WO 2013/175083

(56) Documents cités:
- DE-A1-102005 031 843
- FR-A1- 2 855 809
- FR-A1- 2 931 122
- FR-A1- 2 946 945
- US-B2- 7 140 674

## Description

L'invention a trait au problème de déformation de la partie avant d'un véhicule en cas d'impact. Plus particulièrement, l'invention a trait à un support d'aile avant de véhicule automobile ainsi qu'à une structure avant de véhicule comportant ledit support.

Le document de brevet US 7,140,674 B2 divulgue une structure avant de véhicule automobile comprenant, notamment, un support supérieur et inférieur (référence 50) assimilable à un support d'aile avant s'étendant depuis le pied ou montant avant de la structure vers l'avant du véhicule. Ce support est constitué d'un premier profilé métallique de section en U. Un deuxième profilé métallique (référence 40) de section également en U formant un renfort extérieur est assemblé à la partie arrière du support d'aile en vue de former un corps creux. Ce renfort est fixé à sa partie arrière notamment par vissage à un support de fixation de charnière de portière avant. La cloche de réception de la jambe de force de la suspension de roue avant est disposée et fixée latéralement au support d'aile. Ce support est conçu pour former un élément structurel particulièrement résistant. Selon une variante, un renfort peut être prévu entre une partie basse du montant avant de la structure et le profilé intérieur du support. Ce renfort est alors généralement incliné de manière à former une triangulation destinée à travailler essentiellement en traction. L'objectif de cet enseignement est de former dans la structure du véhicule un squelette le plus rigide possible au niveau du bord supérieur de l'aile avant. L'enseignement ne précise cependant pas la nature des déformations que la structure va subir en cas d'impact frontal avec le véhicule.

Le fait de rendre davantage rigide certaines voies de transmission des efforts d'impact peut avoir des impacts négatifs en ce qui concerne des déformations intrusives de l'habitacle du véhicule. Dans le cas de l'enseignement décrit ci-avant, le support d'aile se voit fortement renforcé par la présence du renfort extérieur auquel il est assemblé. En cas d'impact frontal du véhicule, ce support pourrait provoquer des déformations importantes au niveau du montant avant et, partant, déformer de manière importante l'habitacle. De plus des déformations du tablier avant ou encore du montant avant augmentent fortement les coûts de réparation du véhicule.

L'objectif de l'invention est de proposer une structure avant de véhicule apte à augmenter la réparabilité du véhicule et/ou à augmenter la sécurité passive notamment en diminuant les intrusions dans l'habitacle.

L'invention a pour objet un support d'aile avant de véhicule automobile, comprenant un élément structurel s'étendant suivant une direction principale, ledit élément comprenant une surface supérieure de fixation d'un bord supérieur de l'aile; remarquable en ce que l'élément comprend à une portion arrière une zone d'affaiblissement disposée majoritairement sur une moitié supérieure de sa section de manière à permettre une déformation avec une composante verticale en cas d'impact frontal sur le véhicule.

Selon un mode avantageux de l'invention, l'élément comprend à une portion située à l'avant de la zone d'affaiblissement un bord inférieur présentant une inclinaison dirigée vers l'avant et le haut, ledit bord étant destiné à être soudé à une doublure d'aile, l'inclinaison étant apte à favoriser la composante verticale de la déformation du support en cas d'impact.

Selon un mode avantageux de l'invention, le bord inférieur incliné est situé sur une moitié arrière de l'élément et/ou forme un angle compris entre 5° et 30° avec la direction principale de l'élément.

Selon un mode avantageux de l'invention, la section de l'élément le long du bord incliné comprend une portion généralement verticale et une portion généralement horizontale correspondant à la surface supérieure de fixation, la hauteur de la portion verticale diminuant depuis l'arrière vers l'avant dudit bord.

Selon un mode avantageux de l'invention, l'élément est constitué essentiellement d'un seul élément de tôle métallique plié dont la section varie et comprend sur la majeure partie de sa longueur une portion verticale et une portion horizontale.

Selon un mode avantageux de l'invention, la zone d'affaiblissement comprend une découpe vers le haut d'une portion verticale de l'élément, la section dudit élément à hauteur de ladite zone présentant un profil majoritairement, préférentiellement exclusivement, vertical.

Selon un mode avantageux de l'invention, la zone d'affaiblissement comprend, en outre, une déformation par emboutissage de la portion verticale, ladite déformation formant préférentiellement une nervure orientée essentiellement longitudinalement et/ou un ressaut dans un plan généralement horizontal.

Selon un mode avantageux de l'invention, l'élément comprend à son extrémité arrière, à l'arrière de la zone d'affaiblissement, une surface généralement horizontale avec au moins un orifice, destinée à être fixée par vissage à la structure du véhicule.

L'invention a également pour objet une structure avant de véhicule automobile, comprenant: une aile; une doublure d'aile; un support d'aile s'étendant longitudinalement entre l'aile et la doublure d'aile; remarquable en ce que le support d'aile est conforme à l'invention, ledit support étant fixé à l'aile et à la doublure d'aile.

Selon un mode avantageux de l'invention, l'élément comprend à une portion située à l'avant de la zone d'affaiblissement un bord inférieur présentant une inclinaison dirigée vers l'avant et le haut, le bord inférieur incliné étant fixé par soudure à la doublure d'aile.

La structure peut comprendre un pied ou montant avant et un renfort latéral ancré sur ledit pied ou montant et s'étendant vers l'avant le long de la doublure d'aile. Le renfort est ainsi fixé, préférentiellement par points de soudure à résistance électrique, à la doublure d'aile.

Les mesures de l'invention permettent d'augmenter la sécurité passive du véhicule tout en simplifiant les opérations de réparation du véhicule suite à un choc frontal d'une intensité limitée. En effet, en cas d'impact frontal du véhicule, la structure de ce dernier comporte essentiellement trois voies de transmission des efforts et de dissipation potentielle de l'énergie de l'impact. La première voie est essentiellement la voie centrale correspondant au berceau moteur, la deuxième voie correspond essentiellement aux brancards s'étendant sous le plancher jusqu'au pare-choc avant, et la troisième voie consiste essentiellement en les voies latérales extrêmes, comprenant notamment les ailes, doublures d'aile et supports d'aile allant jusqu'aux deux pieds ou montants avant, à hauteur du bas du pare-brise. Selon les mesures de l'invention, la déformation de la troisième voie est ainsi contrôlée et permet, d'une part, d'optimiser l'absorption d'énergie de l'impact, et d'autre part de limiter la déformation des éléments structurels comme les pieds avant. La déformation du support d'aile ainsi que de la doublure d'aile comprend une composante verticale, cette dernière pouvant toutefois être limitée par la présence d'un renfort latéral ancré sur la pied avant et disposé latéralement et extérieurement à la doublure d'aile et le support d'aile.

D'autres caractéristiques et avantages de la présente invention seront mieux compris à l'aide de la description et des dessins parmi lesquels :
- la figure 1 est une vue latérale de la partie avant de la structure d'un véhicule automobile conforme à l'invention ;
- la figure 2 est une vue en perspective de la partie avant latérale de la structure de véhicule de la figure 1 ;
- la figure 3 est une vue en élévation de la partie de structure illustrée à la figure 2 ;
- la figure 4 est une vue en perspective du support d'aile présent dans la structure visible aux figures 2 et 3 ;
- la figure 5 est une vue latérale du support d'aile de la figure 4 ;
- la figure 6 est une vue en perspective de la partie avant latérale correspondant à la figure 2, la structure étant toutefois à l'état déformé après impact.

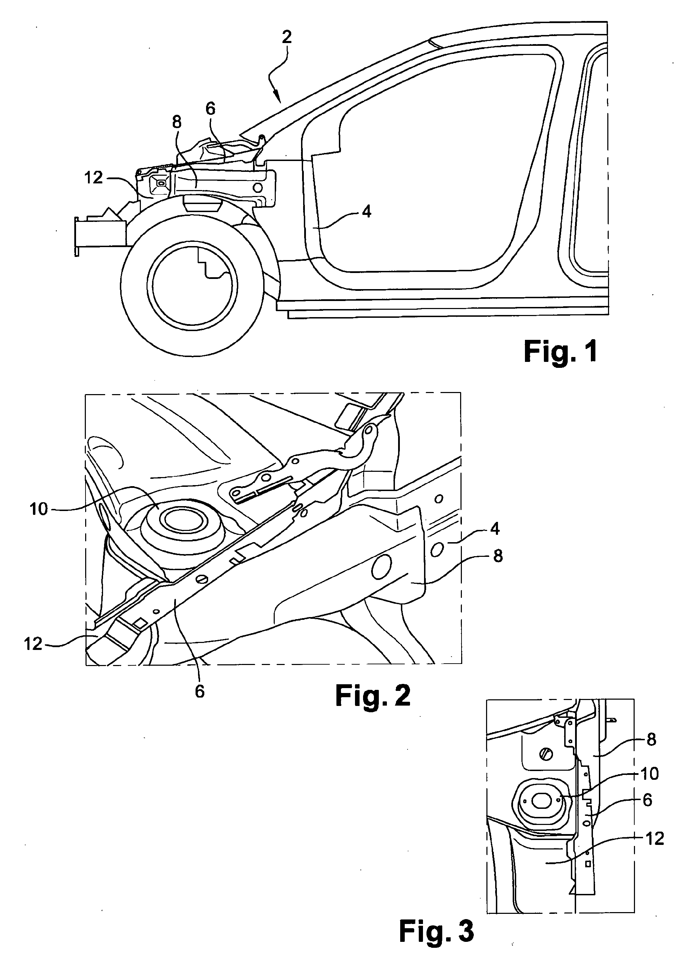

La figure 1 est une vue latérale de la structure avant d'un véhicule automobile, conforme à l'invention. La structure 2 comprend, notamment, un pied ou montant avant 4, un support d'aile 6, un renfort avant 8 et une doublure d'aile avant 12, l'aile avant n'étant pas représentée à des fins de clarté d'exposé de l'invention.

Les figures 2 et 3 illustrent de manière plus détaillée l'agencement de ces éléments. On peut y observer que le support d'aile 6 s'étend longitudinalement depuis le pied avant 4 vers l'avant du véhicule. La doublure d'aile 12 est reliée au support 6 et s'étend sous ce dernier. Le renfort latéral est en appui sur le pied avant 4 et s'étend depuis ledit pied 4 vers l'avant du véhicule le long de la doublure d'aile 12. Le support d'aile 6 présente une surface généralement horizontale destinée au montage par vissage de l'aile avant correspondante.

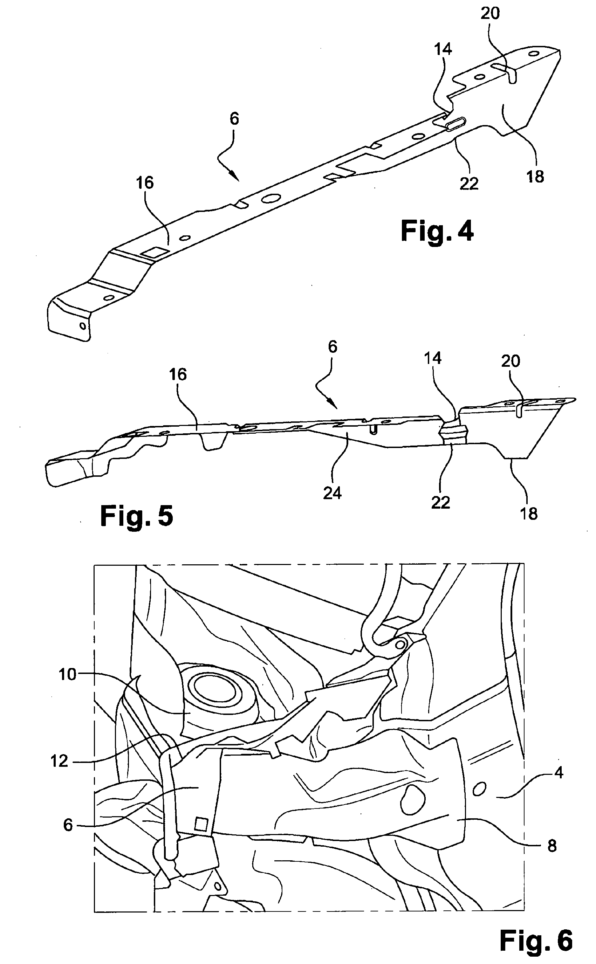

Le support d'aile 6 est davantage détaillé aux figures 4 et 5. On peut y observer qu'il est constitué d'un élément de tôle métallique plié s'étendant suivant une direction principale. Il comprend sur sa majeure partie, plus précisément sur sa partie avant et sa partie centrale, une surface de montage 16 généralement horizontale. Cette dernière peut toutefois présenter l'un ou l'autre ressaut comme cela est visible à son extrémité avant (à gauche sur les figures). La surface de montage 16 peut présenter divers orifices ou découpes pour le montage de l'aile.

Le support 6 comprend sur sa majeure partie une portion généralement verticale ou nervure 18 destinée à assurer, avec la portion horizontale 16, une certaine rigidité et stabilité géométrique. A sa partie arrière, le support 6 comprend une surface généralement horizontale 20 destinée à son montage sur la structure du véhicule. Cette surface 20 présente des orifices de montage notamment par vissage. Cette surface 20 est située du côté opposé à la surface de montage 16 de l'aile, par rapport à la portion verticale. Le support 6 présente ainsi une section transversale en forme de L inversé, le sens du L s'inversant, suivant un axe de symétrie vertical, entre la partie arrière destinée à la fixation du support à la structure et le reste destiné à la fixation à l'aile et à la doublure d'aile.

Le support 6 comprend une zone d'affaiblissement située sur une partie arrière, plus précisément entre l'extrémité arrière destinée à la fixation à la structure et matérialisée par la surface de fixation 20, et le reste du support formant la majorité de sa longueur. La zone d'affaiblissement est réalisée par une entaille ou encoche 14 dans la portion verticale du support, plus particulièrement à une partie du support qui ne comprend pas de portion ou surface horizontale. La section du support à la zone d'affaiblissement correspond ainsi essentiellement à une portion verticale. L'encoche 14 présente son ouverture vers le haut de manière à favoriser une déformation par pliage à cet endroit qui tend à verticaliser la partie avant du support. La zone d'affaiblissement peut également comprendre une déformation 22 de la portion verticale par emboutissage. Cette déformation peut être un bossage en forme de nervure s'étendant essentiellement suivant la direction principale du support. La déformation par emboutissage peut également s'accompagner d'une déformation en ressaut du profil sinon essentiellement rectiligne de la portion verticale du support à cette zone. La nervure et le ressaut sont également visibles à la figure 2.

Le support comprend également un bord inférieur incliné 24 destiné à être relié par soudure avec la doublure d'aile. Ce bord incliné, disposé à l'avant de la zone d'affaiblissement est destiné à également favoriser la verticalisation de la déformation du support. On peut en effet observer que la portion verticale du support le long du bord incliné forme une partie rigide en flexion dans un plan vertical. Il en résulte qu'en cas d'effort de compression sur l'extrémité avant du support lors d'un choc à l'avant du véhicule, cette partie va alors pivoter de manière plus ou moins rigide par rapport à la zone d'affaiblissement. La partie du support située à l'avant de cette partie à bord incliné va pouvoir flamber et se déformer avec la doublure d'aile liée au support. La présence du renfort latéral fixé au pied avant et à la doublure d'aile aura pour effet, en cas d'impact, de limiter la composante verticale et à générer alors une composante latérale dirigée vers l'intérieur du compartiment moteur.

Cette situation est illustrée à la figue 6. On peut observer que le pied ou montant avant 4 est resté essentiellement intact alors que le renfort 8, la doublure d'aile 10 et le support d'aile 6 sont fortement déformés. Ils ont ainsi pu absorber une part importante de l'énergie du choc. L'habitacle du véhicule est peu, voire pas du tout, déformé et les coûts de réparation du véhicule resteront limités dans la mesure où les éléments structurels et principaux de la structure sont restés essentiellement intacts.

## Revendications

1. Support d'aile (6) avant de véhicule automobile, comprenant un élément structurel s'étendant suivant une direction principale, ledit élément comprenant une surface supérieure (16) de fixation d'un bord supérieur de l'aile ;
**caractérisé en ce que**
l'élément comprend à une portion arrière une zone d'affaiblissement (14) disposée majoritairement sur une moitié supérieure de sa section de manière à permettre une déformation avec une composante verticale en cas d'impact frontal sur le véhicule.

2. Support (6) selon la revendication 1, **caractérisé en ce que** l'élément comprend à une portion située à l'avant de la zone d'affaiblissement (14) un bord inférieur (24) présentant une inclinaison dirigée vers l'avant et le haut, ledit bord (24) étant destiné à être soudé à une doublure d'aile (12), l'inclinaison étant apte à favoriser la composante verticale de la déformation du support en cas d'impact.

3. Support (6) selon la revendication 2, **caractérisé en ce que** le bord inférieur incliné (24) est situé sur une moitié arrière de l'élément et/ou forme un angle compris entre 5° et 30° avec la direction principale de l'élément.

4. Support (6) selon l'une des revendications 2 et 3, **caractérisé en ce que** la section de l'élément le long du bord incliné comprend une portion généralement verticale (18) et une portion généralement horizontale (16) correspondant à la surface supérieure de fixation, la hauteur de la portion verticale diminuant depuis l'arrière vers l'avant dudit bord.

5. Support (6) selon l'une des revendications 1 à 4, **caractérisé en ce que** l'élément est constitué essentiellement d'un élément de tôle métallique plié dont la section varie et comprend sur la majeure partie de sa longueur une portion verticale (18) et une portion horizontale (16, 20).

6. Support (6) selon l'une des revendications 1 à 5, **caractérisé en ce que** la zone d'affaiblissement comprend une découpe (14) vers le haut d'une portion verticale (18) de l'élément, la section dudit élément à hauteur de ladite zone présentant un profil majoritairement vertical.

7. Support (6) selon la revendication 6, **caractérisé en ce que** la zone d'affaiblissement comprend, en outre, une déformation (22) par emboutissage de la portion verticale, ladite déformation formant préférentiellement une nervure orientée essentiellement longitudinalement et/ou un ressaut dans un plan généralement horizontal.

8. Support (6) selon l'une des revendications 1 à 7, **caractérisé en ce que** l'élément comprend à son extrémité arrière, à l'arrière de la zone d'affaiblissement (14), une surface généralement horizontale (20) avec au moins un orifice, destinée à être fixée par vissage à la structure du véhicule.

9. Structure avant de véhicule automobile, comprenant :
- une aile ;
- une doublure d'aile (12) ;
- un support d'aile (6) s'étendant longitudinalement entre l'aile et la doublure d'aile ;
**caractérisé en ce que**
le support d'aile est conforme à l'une des revendications 1 à 6, ledit support étant fixé à l'aile et à la doublure d'aile.

10. Structure selon la revendication 9, **caractérisée en ce que** le support d'aile (6) est conforme à l'une des revendications 2 à 4, le bord inférieur incliné (24) étant fixé par soudure à la doublure d'aile.

## Patentansprüche

1. Vorderer Kotflügelträger (6) eines Kraftfahrzeugs, ein Strukturelement umfassend, das sich entlang einer Hauptrichtung erstreckt, wobei das besagte Element eine obere Fläche (16) zum Befestigen einer Oberkante des Kotflügels umfasst;
**dadurch gekennzeichnet, dass**
das Element in einem hinteren Abschnitt eine Schwächungszone (14) umfasst, die mehrheitlich auf einer oberen Hälfte seines Querschnitts angeordnet ist, um bei einem Frontalaufprall auf das Fahrzeug eine Verformung mit einer vertikalen Komponente zu ermöglichen.

2. Träger (6) nach Anspruch 1, **dadurch gekennzeichnet, dass** das Element in einem Abschnitt, der sich vorne in der Schwächungszone (14) befindet, eine Unterkante (24) umfasst, die eine Schräge aufweist, die nach vorne und nach oben gerichtet ist, wobei die besagte Kante (24) dazu bestimmt ist, mit einer Kotflügelauskleidung (12) verschweißt zu werden, wobei die Schräge in der Lage ist, die vertikale Komponente der Verformung des Trägers bei einem Aufprall zu begünstigen.

3. Träger (6) nach Anspruch 2, **dadurch gekennzeichnet, dass** sich die schräge Unterkante (24) auf einer hinteren Hälfte des Elements befindet und/ oder mit der Hauptrichtung des Elements einen Winkel zwischen 5° und 30° bildet.

4. Träger (6) nach einem der Ansprüche 2 und 3, **dadurch gekennzeichnet, dass** der Querschnitt des Elements entlang der schrägen Kante einen im Allgemeinen vertikalen Abschnitt (18) und einen im Allgemeinen horizontalen (16) Abschnitt umfasst, der der oberen Befestigungsfläche entspricht, wobei die Höhe des vertikalen Abschnitts von hinten nach vorne der besagten Kante abnimmt.

5. Träger (6) nach einem der Ansprüche 1 bis 4, **dadurch gekennzeichnet, dass** das Element im Wesentlichen aus einem gebogenen Element aus Metallblech gebildet wird, dessen Querschnitt variiert und am größten Teil seiner Länge einen vertikalen Abschnitt (18) und einen horizontalen (16, 20) Abschnitt umfasst.

6. Träger (6) nach einem der Ansprüche 1 bis 5, **dadurch gekennzeichnet, dass** die Schwächungszone einen Ausschnitt (14) nach oben eines vertikalen Abschnitts (18) des Elements umfasst, wobei der Querschnitt des besagten Elements auf Höhe der besagten Zone ein mehrheitlich vertikales Profil aufweist.

7. Träger (6) nach Anspruch 6, **dadurch gekennzeichnet, dass** die Schwächungszone darüber hinaus eine Verformung (22) durch Tiefziehen des vertikalen Abschnitts umfasst, wobei die besagte Verformung vorzugsweise eine Rippe bildet, die im Wesentlichen in Längsrichtung orientiert ist und/ oder einen Vorsprung auf einer im Allgemeinen horizontalen Ebene.

8. Träger (6) nach einem der Ansprüche 1 bis 7, **dadurch gekennzeichnet, dass** das Element an seinem hinteren Ende, hinter der Schwächungszone (14) eine im Allgemeinen horizontale Fläche (20) mit zumindest einer Bohrung umfasst, die dazu bestimmt ist, durch Verschrauben an der Fahrzeugstruktur befestigt zu werden.

9. Frontstruktur eines Kraftfahrzeugs, folgendes umfassend:
- einen Kotflügel,
- eine Kotflügelauskleidung (12);
- einen Kotflügelträger (6), der sich längs zwischen dem Kotflügel und der Kotflügelauskleidung erstreckt;
**dadurch gekennzeichnet, dass**
der Kotflügelträger einem der Ansprüche 1 bis 6 entspricht, wobei der besagte Träger am Kotflügel und an der Kotflügelauskleidung befestigt ist.

10. Struktur nach Anspruch 9, **dadurch gekennzeichnet, dass** der Kotflügelträger (6) einem der Ansprüche 2 bis 4 entspricht, wobei die schräge Unterkante (24) durch Verschweißen an der Kotflügelauskleidung befestigt ist.

## Claims

1. Front-wing support (6) for a motor vehicle, comprising a structural element extending in a principal direction, said element comprising a top surface (16) for fixing a top edge of the wing;
**characterised in that**
the element comprises, at a rear portion, a weakened zone (14) disposed mainly on a top half of its cross-section so as to allow deformation with a vertical component in the event of frontal impact on the vehicle.

2. Support (6) according to claim 1, **characterised in that** the element comprises, at a portion situated at the front of the weakened zone (14), a bottom edge (24) having an inclination directed forwards and upwards, said edge (24) being intended to be welded to a wing lining (12), the inclination being able to favour the vertical component of the deformation of the support in the event of impact.

3. Support (6) according to claim 2, **characterised in that** the inclined bottom edge (24) is situated on a rear half of an element and/or forms an angle of between 5° and 30° with the principal direction of the element.

4. Support (6) according to one of claims 2 and 3, **characterised in that** the cross-section of the element along the inclined edge comprises a generally vertical portion (18) and a generally horizontal portion (16) corresponding to the top fixing surface, the height of the vertical portion decreasing from the rear towards the front of said edge.

5. Support (6) according to one of claims 1 to 4, **characterised in that** the element consists essentially of a folded metal sheet element, the cross-section of which varies and comprises, over the major part of its length, a vertical portion (18) and a horizontal portion (16, 20).

6. Support (6) according to one of claims 1 to 5, **characterised in that** the weakened zone comprises a cutout (14) towards the top of a vertical portion (18) of the element, the cross-section of said element level with said zone having a mainly vertical profile.

7. Support (6) according to claim 6, **characterised in that** the weakened zone further comprises a deformation (22) by pressing of the vertical portion, said deformation preferentially forming a rib oriented essentially longitudinally and/or a projection in a generally horizontal plane.

8. Support (6) according to one of claims 1 to 7, **characterised in that** the element comprises, at its rear end, at the rear of the weakened zone (14), a generally horizontal surface (20) with at least one orifice, intended to be fixed by screwing to the structure of the vehicle.

9. Motor vehicle front structure, comprising:
- a wing;
- a wing lining (12);
- a wing support (6) extending longitudinally between the wing and the wing lining;
**characterised in that**
the wing support is in accordance with one of claims 1 to 6, said support being fixed to the wing and to the wing lining.

10. Structure according to claim 9, **characterised in that** the wing support (6) is in accordance with one of claims 2 to 4, the inclined bottom edge (24) being fixed by welding to the wing lining.
